# EUROPÄISCHE PATENTSCHRIFT

(11) **EP 4 250 904 B1**
(45) Veröffentlichungstag und Bekanntmachung des Hinweises auf die Patenterteilung: **08.01.2025**
(21) Anmeldenummer: 20819614.7
(22) Anmeldetag: 24.11.2020
(51) Int. Cl.: A01F 11/06, B02B 3/00

(54) **VORRICHTUNG ZUM ENTFERNEN VON HÜLLBLÄTTERN EINES MAISKOLBENS**
DEVICE FOR REMOVING THE HUSK OF A CORNCOB
DISPOSITIF D'ÉLIMINATION DE L'ENVELOPPE D'UN ÉPI DE MAÏS

(43) Veröffentlichungstag der Anmeldung: 04.10.2023
(73) Patentinhaber: Gelbmann, Josef, 7151 Wallern (AT)
(72) Erfinder: Gelbmann, Josef, 7151 Wallern (AT)
(74) Vertreter: Patentanwälte Pinter & Weiss OG
(86) Internationale Anmeldenummer: PCT/AT2020/060418
(87) Internationale Veröffentlichungsnummer: WO 2022/109631

(56) Entgegenhaltungen:
- US-A- 124 486
- US-A- 3 101 720
- US-A1- 2010 018 177
- US-B1- 6 251 008

## Beschreibung

Die gegenständliche Erfindung betrifft eine Vorrichtung und ein Verfahren zum Entfernen von Hüllblättern eines Maiskolbens.

Eine (Kultur)Maispflanze umfasst einen Maishalm, welcher mit wechselständigen Laubblättern versehen ist. Zudem bildet sich an einer Maispflanze eine Anzahl an achselständigen Fruchtständen aus, in welchen die weiblichen Blüten sitzen. Die Fruchtstände sind von Hüllblättern (auch als Scheidenblätter oder Lieschblätter bezeichnet) umhüllt und über einen Kolbenstiel mit dem Maishalm verbunden. Nach der Bestäubung der weiblichen Blüten entwickeln sich Maiskörner an den Fruchtständen, wobei sich abhängig vom Standort und den Lichtverhältnissen üblicherweise ein oder mehrere Kolben pro Maispflanze voll entwickeln. Es bilden sich weiters Griffel (auch Maisfaser, Maisseide, oder Maisbart genannt) zwischen dem mit Maiskörnern besetzten Fruchtstand und den Hüllblättern aus.

Der Fruchtstand umfasst somit den Maiskolben mit Maiskörnern, umgeben von Hüllblättern. Im Reifestadium sind die an der Kolbenspitze des Maiskolbens angeordneten faserförmigen Griffel, zumindest teilweise von den Hüllblättern umgeben und zumindest teilweise getrocknet. Bei der Ernte des Fruchtstandes wird der Kolbenstiel zur Gänze vom Maishalm getrennt oder aber der Kolbenstiel durchtrennt. Daher befindet sich nach der Ernte zumindest ein Teil des Kolbenstiels am Fruchtstand. Es ist vorgesehen, dass bei der Ernte oder im Anschluss die Hüllblätter vom Maiskolben entfernt werden. Hierzu sind einige Methoden bekannt, wobei oftmals gegenläufig rotierende Walzen verwendet werden, welche in Längsachse des Maiskolbens angeordnet sind. Diese Walzen dienen dazu, die Hüllblätter tangential vom Maiskolben abzuziehen, wobei die Gefahr besteht, dass dabei eine Quetschung der Maiskolben, insbesondere der Maiskörner, erfolgt. Dokumente zum Stand der Technik auf diesem Gebiet sind bspw.: US 6 251 008 B1, US 3 101 720 A, US 2010/018177 A1, US 124 486 A.

Es ist eine Aufgabe der gegenständlichen Erfindung eine Vorrichtung und ein Verfahren zum Entfernen von Hüllblättern eines Maiskolbens anzugeben, wobei eine Quetschung des Maiskolbens verhindert wird.

Diese Aufgabe wird erfindungsgemäß durch eine Vorrichtung gelöst, in welcher ein Arbeitsbereich vorgesehen ist, wobei der Arbeitsbereich zur Anordnung eines Maiskolbens entlang einer Längsachse vorgesehen und entlang der Längsachse in einen ersten Teilbereich und einen zweiten Teilbereich unterteilt ist. Es ist eine erste Greifeinheit vorgesehen, die ausgestaltet ist, in einer ersten Grundposition, welche sich im ersten Teilbereich befindet, einen Greifvorgang durchzuführen, um einen ersten Teil der Hüllblätter des Maiskolbens zu erfassen. Es ist eine, vorzugsweise angetriebene, erste Führungseinheit für die erste Greifeinheit vorgesehen, welches angetrieben ist, um die erste Greifeinheit von der ersten Grundposition entlang eines ersten Bewegungspfads zu bewegen, um auf den ersten Teil der Hüllblätter eine quer zur Längsachse nach außen verlaufende Querkraft auszuüben und den ersten Teil der Hüllblätter radial vom Maiskolben zu entfernen.

Weiters wird die Aufgabe durch ein Verfahren gelöst, wobei ein Maiskolben längs entlang einer Längsachse in einen Arbeitsbereich angeordnet wird, wobei der Arbeitsbereich entlang der Längsachse in einen ersten Teilbereich und einen zweiten Teilbereich unterteilt wird, wobei ein erster Teil der Hüllblätter im ersten Teilbereich von einer in einer ersten Grundposition befindlichen ersten Greifeinrichtung erfasst wird, wobei die erste Greifeinheit mittels einer, vorzugsweise angetrieben, ersten Führungseinheit von der ersten Grundposition entlang eines zweiten vorgegebenen Bewegungspfads bewegt wird, sodass eine quer zur Längsachse verlaufende Querkraft auf den ersten Teil der Hüllblätter ausgeübt und der erste Teil der Hüllblätter radial vom Maiskolben entfernt wird.

Durch das Erfassen und das darauffolgende radiale Entfernen des ersten Teils der Hüllblätter werden die am Maiskolben befindlichen Maiskörner nicht gequetscht, wie es bei einer tangentialen Entfernung, insbesondere durch (insbesondere gummierte) in Längsrichtung angeordnete Walzen, oftmals der Fall ist.

Es ist vorteilhaft, wenn eine Halteeinheit vorgesehen ist, welche ausgestaltet ist, den Maiskolben entgegen der ersten Querkraft entlang der Längsachse angeordnet zu halten, um ein besonders sauberes Entfernen des ersten Teils der Hüllblätter zu gewährleisten.

Vorzugsweise ist der erste Teilbereich derart ausgestaltet und die erste Grundposition derart im ersten Teilbereich angeordnet, dass bei einem Greifvorgang der ersten Greifeinheit der erste Teil der Hüllblätter im Bereich einer Kolbenspitze des Maiskolbens erfasst wird. Damit kann der erste Teil der Hüllblätter besonders effizient entfernt werden, wobei zudem zumindest ein Teil der Griffel des Maiskolbens mit entfernt werden kann.

Vorteilhafterweise ist eine zweite Greifeinheit vorgesehen, die ausgestaltet ist, in einer zweiten Grundposition, welche sich im zweiten Teilbereich befindet, einen Greifvorgang durchzuführen, um einen zweiten Teil der Hüllblätter des Maiskolbens zu erfassen, wobei eine, vorzugsweise angetriebene, zweite Führungseinheit für die zweite Greifeinheit vorgesehen, um die zweite Greifeinheit von der zweiten Grundposition entlang eines zweiten vorgegebenen Bewegungspfads zu bewegen, um auf den am Maiskolben anliegenden zweiten Teil der Hüllblätter eine quer zur Längsachse nach außen verlaufende Querkraft auszuüben und den zweiten Teil der Hüllblätter radial vom Maiskolben zu entfernen.

Die zweite Greifeinheit kann dabei als Halteeinheit entgegen der ersten Querkraft angesehen werden, während die erste Greifeinheit als Halteeinheit entgegen der zweiten Querkraft angesehen werden kann. Damit wird dafür gesorgt, dass der Maiskolben entlang der Längsachse angeordnet bleibt um den ersten Teil und zweiten Teil der Hüllblätter effizient vom Maiskolben zu entfernen.

Die erste und/oder zweite Führungseinheit können angetrieben oder antriebslos sein. "Antriebslos" in Bezug auf die Führungseinheit bedeutet "nicht direkt von der Vorrichtung selbst angetrieben", wobei die Führungseinheit natürlich dennoch entlang des zugehörigen Bewegungspfads beweglich ausgestaltet sein kann. So kann eine antriebslose Führungseinheit indirekt angetrieben werden. Beispielsweise kann die zweite Greifeinheit "antriebslos" entsprechend der zweiten Führungseinheit entlang des zweiten Bewegungspfads bewegt werden, während die erste Greifeinheit mittels einer aktiv angetrieben Führungseinheit entlang des ersten Bewegungspfads bewegt wird. Die erste Querkraft wirkt über die erste Greifeinheit von der ersten Führungseinheit über den ersten Teil der Hüllblätter auf den Maiskolben und vom Maiskolben weiter über den zweiten Teil der Hüllblätter auf die zweite Führungseinheit, womit auf den zweiten Teil der Hüllblätter die zweite Querkraft erzeugt wird. Der zweite Teil der Hüllblätter ist über die zweite Greifeinheit mit der zweiten Führungseinheit verbunden. Da die zweite Führungseinheit entlang des zweiten Bewegungspfads beweglich ist, erzeugt die auf die zweite Greifeinheit wirkende zweite Querkraft die Bewegung der zweiten Greifeinheit entlang des zweiten Bewegungspfads. Dabei gibt die zweite Führungseinheit lediglich den zweiten Bewegungspfad vor.

Es ist auch vorstellbar, dass die erste und zweite Führungseinheit jeweils antriebslos sind. So kann beispielsweise der Maiskolben nach dem Schließen der jeweiligen Greifeinheiten mit einer Vorschubkraft versehen werden. Da die Hüllblätter von den Greifeinheiten ergriffen sind, bewirkt diese auf den Maiskolben wirkende Vorschubkraft jeweils eine auf die mit dem Maiskolben verbundenen Hüllblätter wirkende Kraft. Diese Kraft umfasst eine Querkraft, welche wiederum von den Hüllblättern auf die Greifeinheiten wirken, welche sich somit entlang des vorgegebenen Bewegungspfads bewegen. Damit gibt erste/zweite Führungseinheit lediglich den ersten/zweiten Bewegungspfad vor, wobei die Querkräfte indirekt über die Vorschubkraft erzeugt wird.

Vorzugsweise sind die erste und zweite Grundposition diametral um die Längsachse, vorzugsweise aneinander angrenzend, vorgesehen.

Die jeweiligen Bewegungspfade können entlang der Längsachse symmetrisch zueinander sein. Damit kann dafür gesorgt werden, dass der erste Teil der Hüllblätter und der zweite Teil der Hüllblätter gleichmäßig vom Maiskolben entfernt werden.

Vorzugsweise umfasst die erste Führungseinheit einen ersten Grundkörper, an welchem die erste Greifeinrichtung angeordnet ist, und umfasst die zweite Führungseinheit einen zweiten Grundkörper, an welchem die zweite Greifeinrichtung angeordnet ist, wobei besonders vorzugsweise die erste und zweite Greifeinrichtung jeweils in einer Ausnehmung des zugehörigen Grundkörpers angeordnet sind.

Die erste Führungseinheit kann derart ausgestaltet sein, dass der erste Bewegungspfad eine erste Bogenbewegung quer zur Längsachse, vorzugsweise eine Rotation um eine quer zur Längsachse angeordnete erste Rotationsachse in einer ersten Rotationsrichtung, umfasst, wobei die zweite Führungseinheit derart ausgestaltet ist, dass der zweite Bewegungspfad zumindest eine zweite Bogenbewegung quer zur Längsachse entgegen der ersten Bogenbewegung, vorzugsweise eine Rotation um eine quer zur Längsachse angeordnete zweite Rotationsachse in einer zweiten Rotationsrichtung und entgegen der ersten Rotationsrichtung, umfasst.

Sind der erste und zweite Grundkörper jeweils rotationssymmetrisch ausgeführt, so können die Hüllblätter besonders effizient entfernt werden, insbesondere wenn der Bewegungspfad eine Bogenbewegung umfasst.

Die Führungseinheiten können auch ausgestaltet sein, dass der erste Bewegungspfad und der zweite Bewegungspfad eine zueinander gegenläufige Linearbewegung quer zur Längsachse umfassen. Natürlich können die Bewegungspfade auch überlagerte Linearbewegungen und Bogenbewegungen umfassen. Dabei ist es auch möglich, dass ein Teil dieser Bewegungen durch einen Antrieb erfolgt (z.B. eine Bogenbewegung) und ein anderer Teil antrieblos - z.B. eine Linearbewegung in Querrichtung, beispielsweise zur Anpassung an den veränderten Querschnitt des Maiskolbens. Diese antriebslose Bewegung kann erfolgen, indem in der Führungseinheit eine Federkraft nach innen wirkt und der Querschnitt des Maiskolbens entgegen der Federkraft eine Bewegung nach außen bewirkt.

Vorteilhafterweise umfasst zumindest eine Greifeinheit, vorzugsweise die erste und zweite Greifeinheit, zumindest ein zur Durchführung des Greifvorgangs verschiebbares, vorzugsweise quer zur Längsachse verschiebbares, Greifelement.

Besonders vorteilhaft ist es, wenn zumindest eine Greifeinheit, vorzugsweise die erste und zweite Greifeinheit jeweils zwei zur Durchführung des Greifvorgangs gegenläufig verschiebbare, vorzugsweise quer zur Längsachse gegenläufig verschiebbare, Greifelemente umfasst.

Zudem kann eine Zuführeinheit vorgesehen sein, welche ausgestaltet ist, den Maiskolben im Arbeitsbereich zu positionieren, womit sichergestellt werden kann, dass die Hüllblätter von den dafür vorgesehenen Greifeinheiten erfasst werden. Die Zuführeinheit kann auch die Funktion der Halteeinheit erfüllen, um den Maiskolben entgegen der ersten Querkraft (und ggf. entgegen der zweiten Querkraft) entlang der Längsachse angeordnet zu halten, um ein besonders sauberes Entfernen des ersten Teils (und ggf. zweiten Teils) der Hüllblätter zu gewährleisten.

Es kann auch eine Sensoreinheit vorgesehen sein, welche detektiert, ob ein Maiskolben korrekt im Arbeitsbereich angeordnet ist, wobei zudem vorgesehen sein kann, dass Verfahrensschritte zum Erfassen und/oder zum Entfernen der Hüllblätter nur freigegeben werden, wenn ein Maiskolben detektiert wurde.

Vorzugsweise ist eine Schnittvorrichtung zum Abschneiden eines Kolbenstiels vom Maiskolben vorgesehen, vorzugsweise umfassend zwei Messer, besonders vorzugsweise mit jeweils v-förmiger oder konkaver Klinge, die vorzugsweise dem Arbeitsbereich nachgelagert ist.

Weiters kann eine Positioniereinrichtung vorgesehen sein, die ausgestaltet ist, den Maiskolben nach dem Entfernen der Hüllblätter mit der Kolbenspitze nach oben zu orientieren, wobei die Positioniereinrichtung vorzugsweise als einseitig axial drehbar gelagertes Fallrohr ausgestaltet ist. Damit kann der Maiskolben nach dem Entfernen der Hüllblätter weiterverarbeitet werden, z.B. durch eine Schnittvorrichtung vom Kolbenstiel befreit werden. Die Positioniereinrichtung kann auch die Funktion der Halteeinheit erfüllen, um den Maiskolben entgegen der ersten Querkraft (und ggf. entgegen der zweiten Querkraft) entlang der Längsachse angeordnet zu halten, um ein besonders sauberes Entfernen des ersten Teils (und ggf. zweiten Teils) der Hüllblätter zu gewährleisten.

Die gegenständliche Erfindung wird nachfolgend unter Bezugnahme auf die Figuren 1 bis 3d näher erläutert, die beispielhaft, schematisch und nicht einschränkend vorteilhafte Ausgestaltungen der Erfindung zeigen. Dabei zeigt
Fig.1 einen Längsschnitt durch einen Fruchtstand einer Maispflanze,
Fig.2a eine Vorrichtung zum Entfernen von Hüllblättern eines Maiskolbens mit Greifeinheiten in der Grundposition,
Fig.2b die Vorrichtung nach Durchführung des Greifvorgangs,
Fig.2c die Vorrichtung mit teilweise entfernten Hüllblättern,
Fig.2d die Vorrichtung mit großteils entfernten Hüllblättern,
Fig.2e die Vorrichtung mit vollständig entfernten Hüllblättern
Fig.3a eine Positioniereinrichtung in einer Aufnahmestellung,
Fig. 3b die Positioniereinrichtung in einer Entnahmestellung,
Fig. 3c eine Schnitteinrichtung vor dem Abtrennen des Maisstunks,
Fig. 3d die Schnitteinrichtung nach dem Abtrennen des Maisstunks.

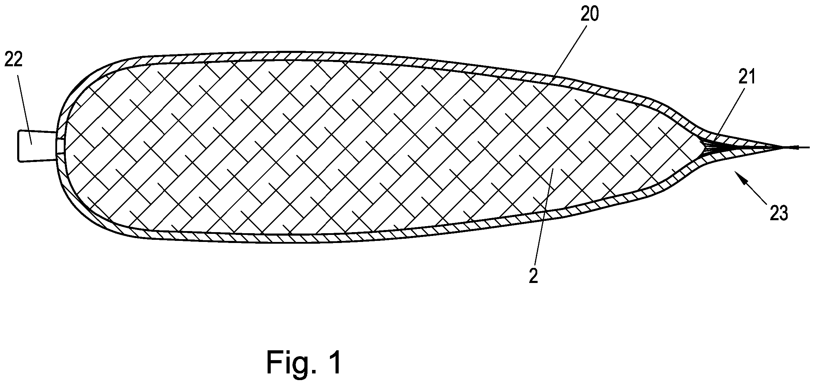

Fig. 1 stellt einen Längsschnitt durch einen Fruchtstand einer Maispflanze dar. Der Fruchtstand umfasst den eigentlichen mit Maiskörnern (in Fig. 1 nicht dargestellt) bestückten Maiskolben 2, welcher von Hüllblättern 20 umgeben ist. Der Maiskolben 2 hat eine längliche Form, weist an einem vorderen axialen Ende eine Kolbenspitze 23 auf und ist an einem hinteren axialen Ende abgerundet. Das hintere Ende kann mit einem Kolbenstiel 22 versehen sein, welcher nach der Ernte oftmals am Fruchtstand verbleibt. Die Hüllblätter 20 erstrecken sich vom hinteren Teil des Maiskolbens 2 zumindest teilweise bis über die Kolbenspitze 23 hinaus. Im Bereich der Kolbenspitze 23 sind zwischen dem Maiskolben 2 und den Hüllblättern 20 Griffel 21 angeordnet, welche auch über die Hüllblätter 20 hinausstehen und somit optisch sichtbar sein können. Maiskolben 2 können asymmetrisch ausgestaltet sein, da es sich hierbei um ein Naturprodukt handelt und da die Maiskolben 2 mit einer Seite am Maishalm anliegen und mit einer Seite vom Haishalm abgewandt sind.

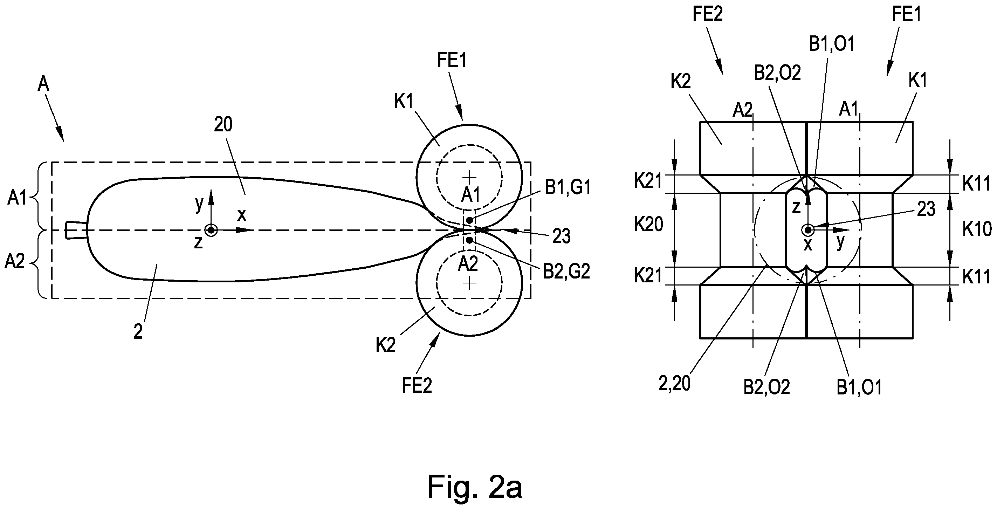

Es wird ein Maiskolben 2 entsprechend Fig 2a in einem Arbeitsbereich A angeordnet. Dies kann manuell erfolgen, oder auch durch eine Zuführeinheit 10, welche ausgestaltet ist, den Maiskolben 2 im Arbeitsbereich A zu positionieren.

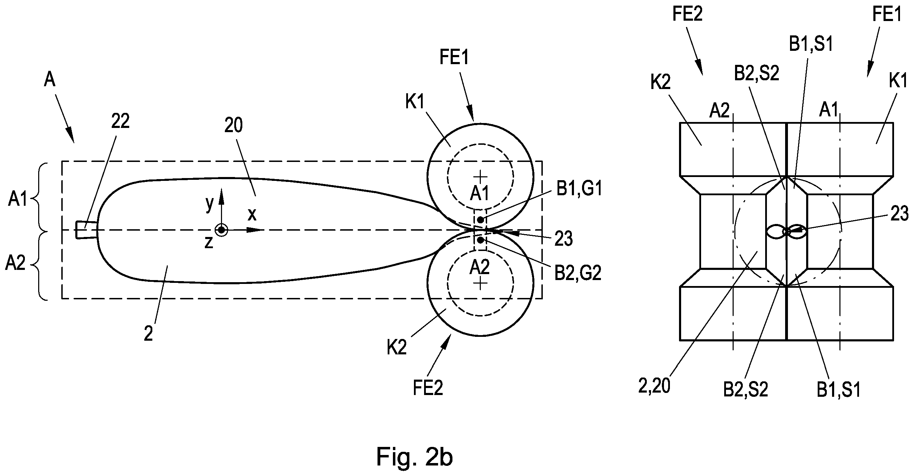

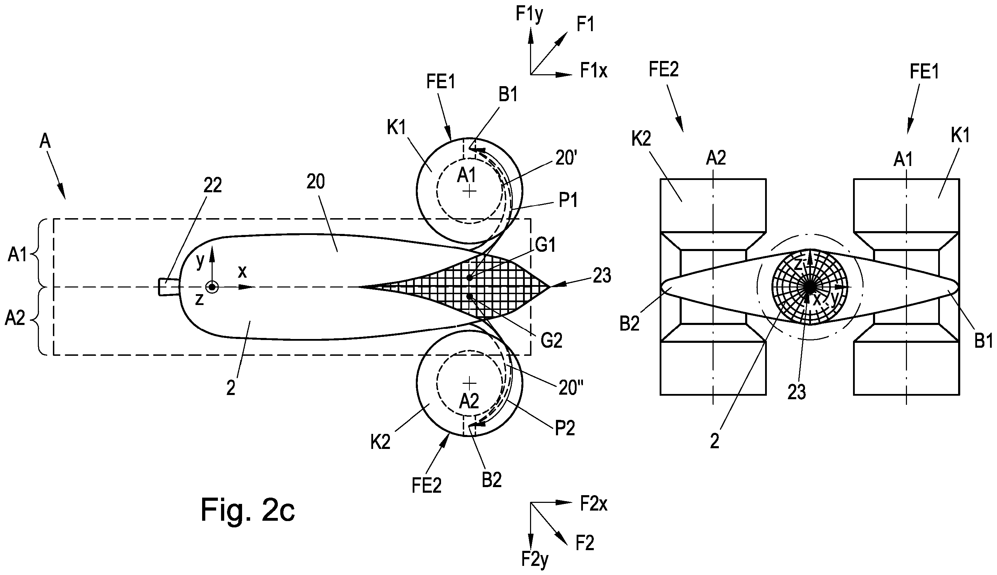

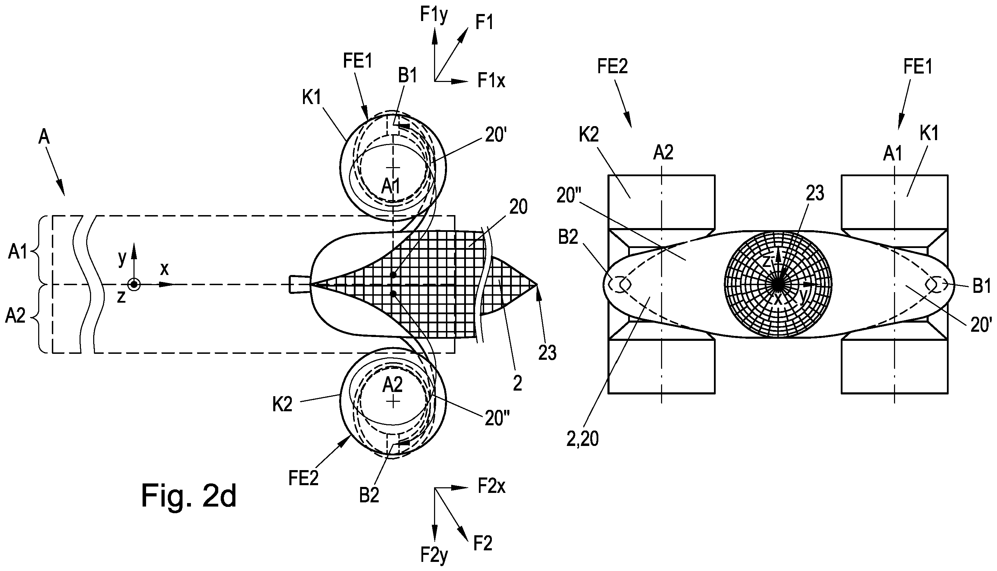

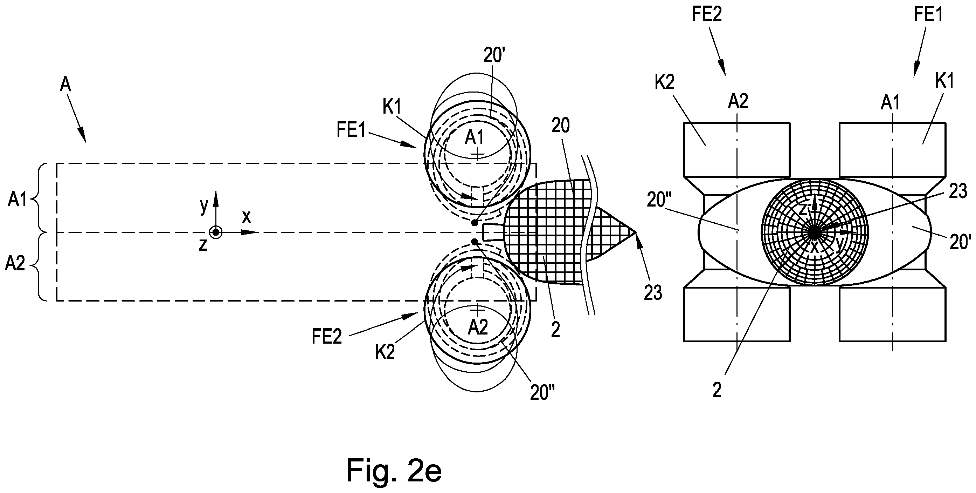

In den Figuren wird zur Beschreibung der Orientierungen von einem kartesischen Koordinatensystem ausgegangen, womit die x die positive Längsrichtung ("vorne") und -x die negative Längsrichtung ("hinten") entlang einer Längsachse X bezeichnet, sowie y die positive Querrichtung ("links") und -y die negative Querrichtung ("rechts") entlang einer Querachse Y bezeichnet. Die Querachse Y und Längsachse X stehen normal aufeinander. Entsprechend einer Rechtschraube stellt z die positive Höhenrichtung ("oben") und -z die negative Höhenrichtung ("unten") entlang einer Hochachse Z, die normal auf die Querachse Y und die Längsachse X ist, dar. Der Ursprung des Koordinatensystems wird beispielhaft in das Zentrum des Arbeitsbereichs A gelegt. Die Figuren 2a, 2b, 2c, 2d, 2e zeigen jeweils eine Draufsicht (d.h. die xy-Ebene) und eine Vorderansicht (d.h. die xz-Ebene) der erfindungsgemäßen Vorrichtung.

Der Maiskolben 2 ist entlang der Längsachse X ausgerichtet, wobei hier vorgesehen ist, dass die Kolbenspitze 23 des Maiskolbens 2 in positiver Längsrichtung x, d.h. vorne, liegt. Der Arbeitsbereich A wird entlang der Längsachse X in einen ersten Teilbereich A1 und einen zweiten Teilbereich A2 unterteilt. Der Arbeitsbereich A kann grundlegend zwei oder dreidimensional sein, wobei in der dargestellten Ausführung ein in der xy-Ebene liegender zweidimensionaler Arbeitsbereich A vorliegt, welcher durch die xz-Ebene in den ersten und zweiten Teilbereich A1, A2 unterteilt ist. Der erste und zweite Teilbereich A1, A2 müssen für sich nicht konstruktiv erkennbar sein, sondern dienen insbesondere zur Beschreibung der Wirkung der weiteren Elemente, wie der Greifeinheit B1 etc. Natürlich kann sich die Einteilung des Arbeitsbereichs A in den ersten und zweiten Teilbereich A1, A2 auch konstruktiv erkennbar sein. Der Maiskolben 2 liegt mit einem Teil (einer ersten Längshälfte) im ersten Teilbereich A1 und mit einem anderen Teil (einer zweiten Längshälfte) im zweiten Teilbereich A2. Für diese Positionierung kann beispielsweise ein geeigneter Einlagebehälter im Arbeitsbereich A vorgesehen sein.

Der Maiskolben ist in Fig. 2a noch von seinen Hüllblättern 20 umhüllt. Es sind eine erste Greifeinheit B1 und vorzugsweise eine zweite Greifeinheit B2 vorgesehen, welche sich in Fig. 2a jeweils in einer Grundposition G1, G2 befinden. Die erste Grundposition G1 der ersten Greifeinheit B1 ist im ersten Teilbereich A1 vorgesehen, die zweite Grundposition G2 der zweiten Greifeinheit B2 im zweiten Teilbereich A2. In Fig. 2a bis 2e sind die die jeweilige Grundpositionen G1, G2 der Greifeinheiten B1, B2 diametral um die Längsachse X angeordnet und grenzen an der Längsachse X aneinander an, was bedeutet, dass sich die erste Grundposition G1 in positiver Querrichtung y und die zweite Grundposition G2 in negativer Querrichtung -y befindet.

Die erste Greifeinheit B1 ist ausgestaltet, in der ersten Grundposition G1 einen Greifvorgang durchzuführen, um einen ersten Teil der Hüllblätter 20' des Maiskolbens 2 zu erfassen. Die zweite, optionale Greifeinheit B2 kann ausgestaltet sein, in der zweiten Grundposition G2 einen Greifvorgang durchzuführen, um einen zweiten Teil der Hüllblätter 20" des Maiskolbens 2 zu erfassen. Ist vorgesehen lediglich den ersten Teil der Hüllblätter 20' zu entfernen und den Rest der Hüllblätter am Maiskolben 2 zu belassen, so kann auf die zweite Greifeinheit G2 verzichtet werden. In den Figuren werden sowohl eine erste Greifeinheit G1 als auch eine zweite Greifeinheit G2 dargestellt, was jedoch lediglich eine bevorzugte Ausgestaltung darstellt.

Die Greifeinheit B1 wird zur Durchführung des Greifvorgangs von einer Offenstellung O1 in eine Schließstellung S1 gebracht, wobei in der Schließstellung S1 jeweils der erste Teil der Hüllblätter 20' erfasst wird.

Ist eine zweite Greifeinheit B2 vorgesehen, so kann diese ebenso zur Durchführung des Greifvorgangs von einer Offenstellung O2 in eine Schließstellung S2 gebracht werden, wobei in der Schließstellung S2 der zweite Teil der Hüllblätter 20" erfasst wird.

Vorzugsweise umfasst die erste Greifeinheit B1, zumindest ein zur Durchführung des Greifvorgangs, verschiebbares Greifelement. Ist eine zweite Greifeinheit B2 vorgesehen, so kann diese ebenso ein zur Durchführung des Greifvorgangs, verschiebbares Greifelement umfassen.

Durch das Verschieben des Greifelements, z.B. entlang der Hochachse Z, wird jeweils der erste und ggf. zweite Teil der Hüllblätter 20', 20" in der zugehörigen Greifeinheit B1, B2 durch das Greifelement, z.B. jeweils in einem an der Greifeinheit B1, B2 vorgesehenes Gegendruckelement, eingeklemmt.

Besonders vorteilhafterweise umfassen die Greifeinheiten B1, B2 jeweils zwei zur Durchführung des Greifvorgangs gegenläufig verschiebbare Greifelemente. Durch das Verschieben der Greifelemente der ersten Greifeinheit B1, z.B. entlang der Hochachse Z, wird der erste Teil der Hüllblätter 20' zwischen diesen Greifelementen eingeklemmt und analog durch das Verschieben der Greifelemente der zweiten Greifeinheit B2, z.B. entlang der Hochachse Z, der zweite Teil der Hüllblätter 20" zwischen diesen Greifelementen eingeklemmt, wie es auch in den Figuren angedeutet ist. Es ist vorteilhaft, wenn die Greifelemente einen oder mehrere in Verschiebungsrichtung ausgerichtete Zähne umfassen, um die Hüllblätter 20 sicher zu erfassen. Die dargestellten Greifelemente weisen jeweils einen Zahn auf.

Es ist vorteilhafterweise eine erste Führungseinheit FE1 für die erste Greifeinheit B1 vorgesehen ist, welches angetrieben ist, um die erste Greifeinheit B1 von der ersten Grundposition G1 entlang eines ersten Bewegungspfads P1 zu bewegen. Zudem kann für die zweite Greifeinheit B2 (sofern diese vorgesehen ist) ein zweites Führungseinheit FE2 vorgesehen ist, welches angetrieben sein kann um die zweite Greifeinheit B2 von der zweite Grundposition G2 entlang eines ersten Bewegungspfads P2 zu bewegen.

Die erste Führungseinheit FE1 umfasst vorteilhafterweise einen ersten Grundkörper K1, an welchem die erste Greifeinrichtung B1 angeordnet ist. Das zweite Führungseinheit FE2 umfasst vorteilhafterweise einen zweiten Grundkörper K2, an welchem die zweite Greifeinrichtung B2 angeordnet ist. Besonders vorteilhaft ist es, wenn die erste Greifeinrichtung B1 (und sofern vorgesehen die zweite Greifeinrichtung B2) an einer Ausnehmung K10, K20 des zugehörigen Grundkörpers K1, K2 angeordnet sind. Die Ausnehmungen K10, K20 sind hier nur beispielhaft in Bezug auf die Höhenachse Z zentral angeordnet, können aber auch dezentral angeordnet sein.

Die dargestellten Grundkörper K1, K2, sind jeweils rotationssymmetrisch ausgeführt, womit diese jeweils eine entlang der Hochachse Z orientierte Walze mit einem im Bereich der Ausnehmung K10, K20 verringertem Querschnitt darstellen. Der Übergangsbereich K11, K20 vom Bereich des Grundkörpers K1, K2, welcher den ursprünglichen Querschnitt aufweist, kann abgeschrägt sein, womit eine automatische Zentrierung der Kolbenspitze 23 im Bereich der Ausnehmung K10, K20 und damit im Bereich der Greifeinrichtungen B1, B2 gesorgt wird.

Fig. 2a stellt die Greifeinheiten B1, B2 jeweils in einer Offenstellung O1, O2 dar, wobei hier jeweils Greifelemente vorgesehen sind, die jeweils entlang der Höhenachse X zueinander beabstandet, d.h. geöffnet, sind und somit hier die Ausnehmung des jeweiligen Grundkörpers G1, G2 freigeben. Es erfolgt daraufhin der Greifvorgang durch einen Übergang von der Offenstellung O1, O2 in die Schließstellung S1, S2. In Fig. 2a ist anhand der Pfeile angedeutet, dass der Greifvorgang der ersten und zweiten Greifeinheit B1, B2 jeweils durch eine entlang der Höhenachse Z gegeneinander gerichtete Verschiebung der zugehörigen Greifelemente in der Ausnehmung der Führungseinheit FE1, FE2 erfolgt.

Vorzugsweise ist zumindest eine Sensoreinheit vorgesehen, um zu detektieren ob ein Maiskolben 2 korrekt im Arbeitsbereich A angeordnet ist und bei erfolgreicher Detektion die Durchführung des Greifvorgangs und/oder anderer Verfahrensschritte, wie z.B. der darauffolgenden Entblätterung freizugeben

Nach Abschluss des Greifvorgangs (Fig. 2b) ist der erste Teil der Hüllblätter 20' durch die erste Greifeinheit B1 erfasst. Ist wie dargestellt eine zweite Greifeinheit B2 vorgesehen, so ist nach dem Abschluss des Greifvorgangs der zweite Teil der Hüllblätter 20" durch die zweite Greifeinheit B2 erfasst, wie es in Fig. 2b dargestellt ist.

Um die Hüllblätter 20 vom Maiskolben 2 zu entfernen, ist die erste Führungseinheit FE1 ausgestaltet, die erste Greifeinheit B1 von der ersten Grundposition G1 entlang eines ersten vorgegebenen Bewegungspfads P1 zu bewegen. Weiters ist die zweite Führungseinheit FE2 (sofern eine vorgesehen ist) ausgestaltet, die zweite Greifeinheit B2 von der zweiten Grundposition G2 entlang eines zweiten vorgegebenen Bewegungspfads P2 zu bewegen. Umfassen die Führungseinheiten FE1, FE2 jeweils Grundkörper K1, K2, an denen die jeweiligen Greifelemente B1, B2 angeordnet sind, so kann durch eine Bewegung der Grundkörper K1, K2 der entsprechende Bewegungspfad P1, P2 der Greifelemente B1, B2 erzeugt werden. Die erste/zweite Führungseinheit FE1 sind wie erwähnt ausgestaltet, um die erste/zweite Greifeinheit B1/B2 von der ersten/zweiten Grundposition G1 entlang eines ersten/zweiten Bewegungspfads P1/P2 zu bewegen. Hierzu können z.B. die Grundkörper K1, K2 als Teil der zugehörigen Führungseinheit FE1, FE2 elektrisch, hydraulisch, pneumatisch etc. und entlang von Schienen, Riemen etc. bewegt werden, womit die Führungseinheiten FE1, FE2 jeweils elektrische und/oder hydraulische und/oder pneumatische Elemente sowie Schienen, Riemen etc. aufweisen können, um die (z.B. an Grundkörper K1, K2 angeordneten) Greifelemente B1, B2 entlang der Bewegungspfade P1, P2 zu bewegen. Zur einfacheren Darstellung sind in den Figuren bis auf die Grundkörper K1, K2 keine detaillierten Ausgestaltungen der Führungseinheiten FE1, FE2 dargestellt.

Der Bewegungspfad P1, P2 kann nicht nur Komponenten entlang der Querachse Y und der Längsachse X, sondern auch entlang der Hochachse Z aufweisen. Es ist aber vorteilhaft, der Bewegungspfad P1, P2 ausschließlich in der xy-Ebene liegt, d.h. keine Komponente entlang der Hochachse Z vorgesehen ist.

Durch die Bewegungspfade P1, P2 der Greifeinheiten B1, B2 (vorgegeben durch die Führungseinheiten FE1, FE2) wirkt mittels der ersten Greifeinheit B1 auf den ersten Teil der Hüllblätter 20' eine erste Kraft F1 und mittels der zweiten Greifeinheit B2 auf den zweiten Teil der Hüllblätter 20' eine zweite Kraft F2. Die erste Kraft F1 weist eine Querkraft F1y als Komponente in positiver Querrichtung y auf, die zweite Kraft F2 zumindest eine Komponente als Querkraft F2y in negativer Querrichtung -y.

Erster und zweiter Grundkörper K1, K2 sind vorzugsweise entlang der Querachse Y beweglich gelagert, sodass diese am Maiskolben 2 anliegen. Es kann auch vorgesehen sein, dass die Grundkörper K1, K2 mit einer geeigneten (Feder-)Kraft zueinander gedrückt werden, wobei darauf zu achten ist, dass die Maiskolben nicht gequetscht werden.

Obgleich in den Figuren eine Bogenbewegung, hier grundlegend eine Rotationsbewegung mit überlagerter Linearbewegung in Querrichtung, der Greifeinheiten B1, B2 durch Rotation der Grundkörper K1, K2 dargestellt ist, ist es auch vorstellbar, dass eine zueinander gegenläufige angetriebene Linearbewegung entlang der Querachse Y durchgeführt wird, um die jeweiligen Teile 20`, 20" der Hüllblätter 20 vom Maiskolben 2 weg und quer auseinander zu ziehen. Damit würde der jeweilige Bewegungspfad P1, P2 entlang der Querachse X (d.h. der erste Bewegungspfad P1 in positiver in Querrichtung x und der Bewegungspfad P2 in negativer Querrichtung -y) führen. Damit würden die Kräfte F1, F2 den jeweiligen Querkräften F1y, F2y entsprechen. Natürlich sind auch nicht in den Figuren dargestellte Kombinationen aus Rotationsbewegungen und Linearbewegungen entlang der Querachse Y möglich. Wichtig ist, dass auf den ersten Teil der Hüllblätter 20' (und sofern eine zweite Greifeinheit B2 vorgesehen ist, auf den zweiten Teil der Hüllblätter 20") eine quer zur Längsachse X nach außen verlaufende Querkraft F1y (und ggf. F2y) ausgeübt wird, um den ersten Teil der Hüllblätter 20' (und ggf. den zweiten Teil der Hüllblätter 20") radial vom Maiskolben 2 zu entfernen.

Der Bewegungspfad P1, P2 kann durch Antrieb der Führungselemente FE1, FE2 erzeugt werden. Es können auch Komponenten des Bewegungspfads P1, P2 durch einen Antrieb der Führungselemente FE1, FE2 erzeugt werden und Komponenten des Bewegungspfads P1, P2 antriebslos ausgeführt sein. Es kann auch vorgesehen sein, dass Komponenten des Bewegungspfads P1, P2 passiv angetrieben sind. Beispielsweise kann die in den Figuren dargestellte, um die Rotationsachsen R1, R2 rotierenden Rotationskomponenten der Bewegungspfade P1, P2 aktiv angetrieben sein und die Linearkomponente der Bewegungspfade, d.h. die Linearbewegung der Rotationsachsen R1, R2 entlang der Querachse Y, passiv vorgesehen sein. Die passive Bewegung ergibt sich z.B. durch Anpassung der Position der Rotationsachsen R1, R2 an den Querschnitt des Maiskolbens 2, z.B. durch Einwirkung einer Federkraft nach innen, d.h. zur Längsachse X. Dabei ist zu beachten, dass die Federkraft in einer Größenordnung liegt, welche nicht zu einer Quetschung der Maiskörner führt.

Die Querkräfte F1y, F2y sind in entgegengesetzte Richtungen gerichtet, womit durch die entstehende Spannung zwischen dem ersten Teil der Hüllblätter 20' und dem zweiten Teil der Hüllblätter 20" der Maiskolben 2 in positiver Längsrichtung x bewegt wird. Ist der Bewegungspfad P1, P2 derart ausgestaltet, dass die Hüllblätter 20 nicht nur vollständig gespannt, sondern überspannt werden, so werden diese vom Maiskolben 2 abgetrennt.

Die erste Führungseinheit FE1 kann wie erwähnt derart ausgestaltet sein, dass der erste Bewegungspfad P1 zumindest eine erste Bogenbewegung umfasst, vorzugsweise eine Rotation um eine quer zur Längsachse X angeordnete erste Rotationsachse A1 in einer ersten Rotationsrichtung R1. Weiters kann die zweite Führungseinheit FE2 (sofern vorhanden) derart ausgestaltet sein, dass der zweite Bewegungspfad P2 zumindest eine zweite Bogenbewegung entgegen der ersten Bogenbewegung, vorzugsweise eine Rotation um eine quer zur Längsachse X angeordnete zweite Rotationsachse A2 in einer zweiten Rotationsrichtung R2 entgegen der ersten Rotationsrichtung R1, umfasst.

Dies ist in den Fig. 2c, 2d und Fig. 2e dargestellt, wobei die erste und zweite Rotationsachse R1, R2 parallel zur Höhenachse Z verlaufen und jeweils der erste und zweite Grundkörper K1, K2 um die zugehörige Rotationsachse R1, R2 rotieren. Es wurde in Fig.2c jeweils eine Rotation um 180 Grad durchgeführt, in Fig. 2d wurde die Rotation weiter durchgeführt (beispielsweise zwei bis drei Umdrehungen) und in Fig.2e die Rotation derart weit durchgeführt, dass der erste Teil der Hüllblätter 20' auf die erste Führungseinheit FE1 (und der zweite Teil der Hüllblätter 20" auf die zweite Führungseinheit FE2) aufgespult, d.h. aufgewickelt wurde(n).

Die Rotationsbewegung kann auch weiter verlaufen, um die Hüllblätter 20 gänzlich vom Maiskolben 2 abzutrennen, nachdem sie auf den Grundkörper K1, K2 aufgespult wurden. Nach dem Abtrennen können die Hüllblätter 20 vom Grundkörper K1, K2 abfallen. Vorzugsweise werden die Grundkörper K1, K2 im Anschluss, vorzugsweise ruckartig, in entgegengesetzter Richtung rotiert, womit etwaige noch an den Grundkörpern K1, K2 verbliebene Hüllblätter gelöst werden.

Die Bewegungspfade P1, P2 sind in den Figuren als durchgezogener Pfeil, welcher sich aus einer Rotation um die Rotationsachsen A1, A2 und einer Linearbewegung in Querrichtung Y zusammensetzt, wobei in den Figuren jeweils der bisher durchlaufene Bewegungspfad P1, P2 dargestellt ist. So setzen sich die Bewegungspfade P1, P2 in Fig. 2c aus einer 180 Grad Drehung um die Rotationsachsen A1, A2 mit überlagerter nach außen gerichteter Linearbewegung in Querrichtung Y zusammen, wobei in Fig. 2d die Rotation um die Rotationsachsen A1, A2 und auch die Linearbewegung in Querrichtung Y weiter fortgeschritten ist. In Fig. 2e ist die Rotation um die Rotationsachsen A1, A2 noch weiter fortgeschritten, wobei sich zudem eine nach innen gerichtete Linearbewegung in Querrichtung Y überlagert. Somit stellt der Bewegungspfad P1, P2 jeweils eine entlang der Querrichtung Y (erst nach außen und danach nach innen) verschobene Spirale dar.

Es ist zu beachten, dass die Wirkung der Kräfte F1, F2 nicht der Bewegung der jeweiligen Greifeinheit B1, B2 entlang des zugehörigen Bewegungspfads P1, P2 entsprechen muss, da die auf am Maiskolben 2 anliegenden Teile der Hüllblätter 20', 20" wirkenden Kräfte F1, F2 betrachtet werden. Somit kann insbesondere bei einem Bogenanteil der Bewegungspfade P1, P2 (z.B. in Form eines Rotationsanteils) der Fall eintreten, dass der Bewegungspfad P1, P2 eine Komponente in negativer Längsrichtung -x aufweist, wie in Fig. 2d dargestellt oder, wenn eine weiterführende Rotation um 90° erfolgt, gar entgegen der zugehörigen Querkraft F1y, F2y erfolgt.

Natürlich können die Bewegungspfade P1, P2 jeweils Anteile von simultanen (d.h. vermischten) oder sequentiellen Rotationsbewegungen und Querbewegungen umfassen. Es ist aber vorteilhaft, wenn anfangs zumindest teilweise eine Querbewegung erfolgt, um die Greifeinheiten B1, B2 voneinander zu entfernen und den Maiskolben 2 im weiteren Verlauf nicht zu quetschen, da an der Kolbenspitze 23 ein geringerer Durchmesser als im Mittelteil des Maiskolbens 2 vorliegt. In Fig. 2c weisen die Bewegungspfade P1, P2 beispielsweise erst eine Rotation um die Rotationsachse A1, A2 auf, welche mit einer Linearbewegung nach außen (d.h. in positiver Querrichtung für den ersten Bewegungspfad P1 und in negativer Querrichtung Y für den zweiten Bewegungspfad P2) überlagert ist. In Fig. 2d setzen sich die Bewegungspfade P1, P2 weiter in Form einer Rotation um die Rotationsachse A1, A2 mit überlagerter Linearbewegung in positiver/negativer Querrichtung Y fort. In Fig. 2e setzt sich der jeweilige Bewegungspfad P1, P2 weiter als Rotation um die Rotationsachse A1, A2 fort, ist jedoch mit einer nach innen weisenden Linearbewegung (d.h. in negativer Querrichtung für den ersten Bewegungspfad P1 und in positiver Querrichtung Y für den zweiten Bewegungspfad P2) überlagert. Dies ist besonders vorteilhaft, wenn sich der Querschnitt des Maiskolbens 2 im Bereich der Führungseinheit FE1, FE2 verringert, wie in Fig. 2e, wo der Maiskolben 2 derart weit in positiver Längsrichtung X fortgeschritten ist, dass sich sein Stunk im Bereich der Führungseinheit FE1, FE2 befindet. Trotz dieser rotativen Bewegungspfade P1, P2 mit überlagerten Linearbewegungen in positiver und negativer Querrichtung X wirkt auf den ersten/zweiten Teil der Hüllblätter 20'/20" eine jeweils quer zur Längsachse X nach außen verlaufende Querkraft F1y, F2y um den ersten/zweiten Teil der Hüllblätter 20'/20" radial vom Maiskolben 2 zu entfernen.

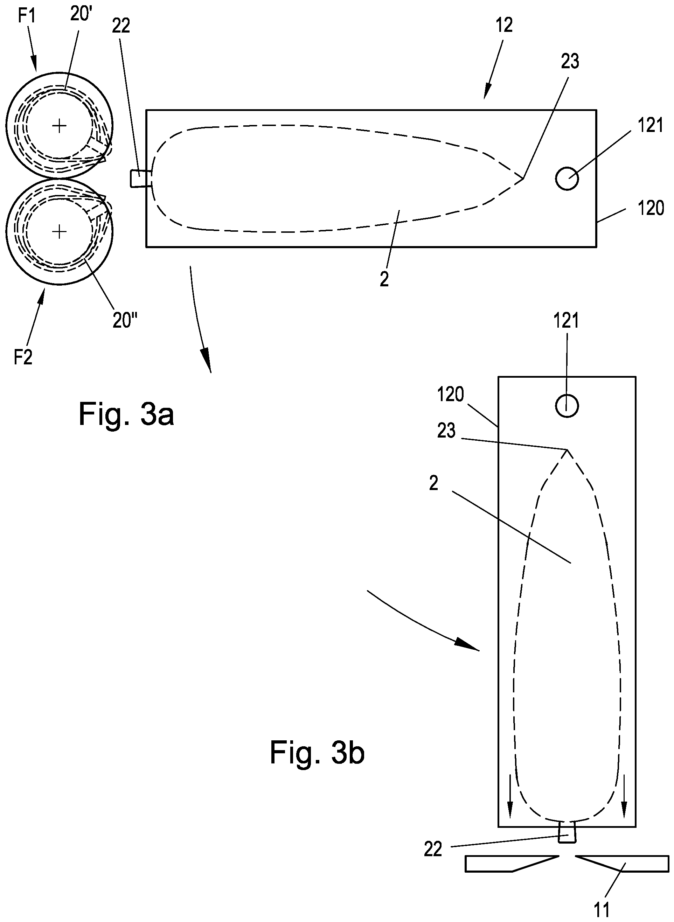

Es kann weiters eine Positioniereinrichtung 12 vorgesehen sein, die ausgestaltet ist den Maiskolben 2 nach dem Entfernen der Hüllblätter 20 mit der Kolbenspitze 23 nach oben zu orientieren. In Fig. 3a, b ist ein einseitig um eine Schwenkachse 121 drehbar gelagertes Fallrohr 120 als Positioniereinrichtung 12 dargestellt, welches dem Arbeitsbereich A derart nachgelagert ist, dass der Maiskolben 2 mit der Kolbenspitze 23 voran in das Fallrohr 120 eingebracht wird. Die Schwenkachse 121 kann sich auch außerhalb des Fallrohrs 120 befinden. Das Fallrohr 120 weist einen vorderen Bereich und einen hinteren Bereich auf. Vorzugsweise ist die Positioniereinrichtung 12 in einer Aufnahmeposition zur Aufnahme des Maiskolbens 2 waagrecht ausgerichtet. Wird der Maiskolben mit der Kolbenspitze 23 voran in das Fallrohr eingebracht, so befindet sich die Kolbenspitze 23 im vorderen Bereich des Fallrohrs 120 und der Kolbenstiel 22 im hinteren Bereich des Fallrohrs 120. Der Vordere Bereich des Fallrohrs 120 ist um eine querliegende Schwenkachse 121 gelagert und ausgestaltet nach dem Einbringen des Maiskolbens 2 das Fallrohr derart um die Schwenkachse 121 in eine Entnahmeposition zu schwenken. Die Entnahmeposition der Positioniereinrichtung 12 ist vorzugsweise vertikal angeordnet, womit der hintere Bereich des Fallrohrs 120 nach unten orientiert ist, womit wiederum die Kolbenspitze 23 des Maikolbens 2 nach oben orientiert ist. Ist die Positioniereinrichtung 12 als Fallrohr 120 ausgestaltet, so kann ein Schwenk des Fallrohrs 120 von der Aufnahmeposition zur Entnahmeposition erfolgen, indem eine Steuerungseinheit eine Rotation des Fallrohrs 120 um die Schwenkachse 121 durchführt. Der Schwenk kann aber auch durch die Masse des Maiskolbens 2 erfolgen. Befindet sich die Positioniereinrichtung 12 (hier das Fallrohr 120) in der Entnahmeposition, so kann der Maiskolben 2 entnommen werden, was aufgrund der Schwerkraft wiederum ohne äußere Einwirkung erfolgen kann.

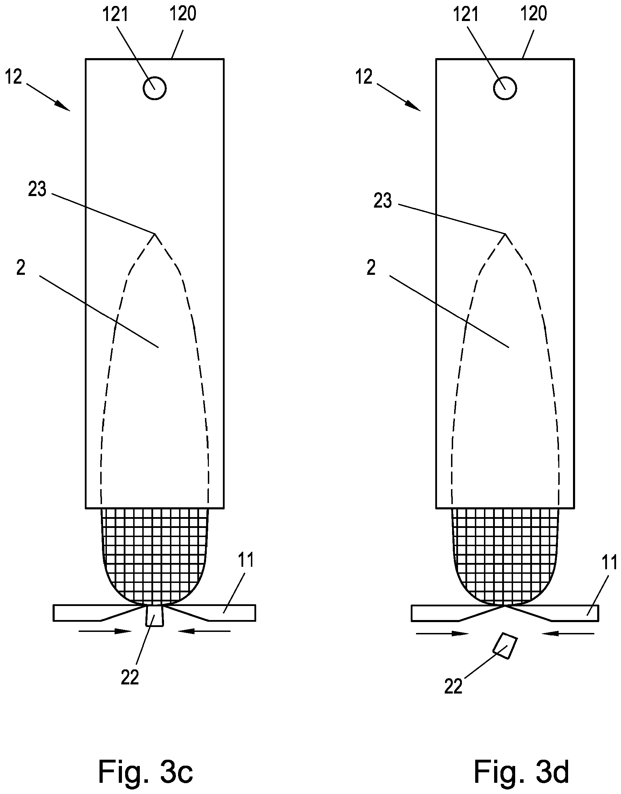

Es kann weiters eine Schnittvorrichtung 11 zum Abschneiden eines Kolbenstiels 22 vom Maiskolben 2 vorgesehen sein. Diese Schnittvorrichtung 11 kann ein, zwei oder mehr Messer, vorzugsweise zumindest teilweise mit v-förmiger oder konkaver Klinge, umfassen, welche mit der Klinge zueinander bewegt werden um den Kolbenstiel 22 vom Maiskolben 2 abzuschneiden. Eine beispielhafte Schnittvorrichtung 11 ist in Fig. 3c und 3d dargestellt, wobei die Schnittvorrichtung 11 hier dem Arbeitsbereich A nachgelagert ist. Das bedeutet, dass erst der Maiskolben 2 (zumindest zum Teil) von den Hüllblättern 20 befreit wird und danach der Kolbenstiel 22 entfernt wird. Natürlich kann der Kolbenstiel auch dem Arbeitsbereich A vorgelagert sein, womit der Kolbenstiel 22 vor dem Entfernen des zumindest Teils der Hüllblätter 20 entfernt wird.

Besonders vorteilhaft ist es, wenn eine Positioniereinrichtung 12 dem Arbeitsbereich A nachgelagert ist und weiters eine Schnittvorrichtung 11 der Positioniereinrichtung 12 nachgelagert ist. Somit kann der Maiskolben 2 von der Entnahmeposition der Positioniereinrichtung 12 direkt der Schnittvorrichtung 11 zugeführt werden. Damit kann der Maiskolben 2 nach dem Entfernen der Hüllblätter 20 erst in eine Entnahmeposition orientiert werden und daraufhin der Kolbenstiel 22 entfernt werden. In der Ausgestaltung nach Fig. 3b wird der Maiskolben 2 aufgrund seiner Masse von der Positioniereinrichtung 12 in der Entnahmeposition der Schnittvorrichtung 11 zugeführt.

Es kann zudem der Schnittvorrichtung 11 eine weitere Positioniereinrichtung vorgelagert sein (nicht dargestellt), welche einer Positioniereinrichtung 12 (sofern diese vorgesehen ist) nachgelagert sein kann, um den Maiskolben 2 in eine geeignete Position zum Entfernen des Kolbenstiels 22 zu bringen. Hierzu kann die weitere Positioniereinrichtung einen Langschlitz umfassen, welcher eine Breite aufweist, welche größer als ein üblicher Kolbenstiel 22, jedoch geringer als ein üblicher Maiskolben 2 ist. Der Kolbenstiel wird beispielsweise aufgrund seiner Masse im Langschlitz positioniert, woraufhin die weiter Positioniereinrichtung rotiert und somit den Kolbenstiel in der Mitte des Langschlitzes zentriert. Vorzugsweise ist die Schnittvorrichtung 11 (z.B. die Spitze der v-förmigen Klinge(n)) in der Mitte des Langschlitzes angeordnet, so kann ein Abtrennen des Kolbenstiels 22 erfolgen.

## Patentansprüche

1. Vorrichtung zum Entfernen von Hüllblättern (20) eines Maiskolbens (2), **dadurch gekennzeichnet, dass** ein Arbeitsbereich (A) vorgesehen ist, wobei der Arbeitsbereich (A) zur Anordnung eines Maiskolbens (2) entlang einer Längsachse (X) vorgesehen ist und entlang der Längsachse (X) in einen ersten Teilbereich (A1) und einen zweiten Teilbereich (A1) unterteilt ist, **dass** eine erste Greifeinheit (B1) vorgesehen ist, die ausgestaltet ist, in einer ersten Grundposition (G1), welche sich im ersten Teilbereich (A1) befindet, einen Greifvorgang durchzuführen, um einen ersten Teil der Hüllblätter (20`) des Maiskolbens (2) zu erfassen, **und dass** eine, vorzugsweise angetriebene, erste Führungseinheit (FE1) für die erste Greifeinheit (B1) vorgesehen ist, wobei die erste Führungseinheit (FE1) ausgestaltet ist, um die erste Greifeinheit (B1) von der ersten Grundposition (G1) entlang eines ersten Bewegungspfads (P1) zu bewegen, um auf den ersten Teil der Hüllblätter (20`) eine quer zur Längsachse (X) nach außen verlaufende Querkraft (F1y) auszuüben und den ersten Teil der Hüllblätter (20') radial vom Maiskolben (2) zu entfernen.

2. Vorrichtung nach Anspruch 1, **dadurch gekennzeichnet, dass** der erste Teilbereich (A1) derart ausgestaltet ist und die erste Grundposition (G1) derart im ersten Teilbereich (A1) angeordnet ist, dass bei einem Greifvorgang der ersten Greifeinheit (B1) der erste Teil der Hüllblätter (20`) im Bereich einer Kolbenspitze (23) des Maiskolbens (2) erfasst wird.

3. Vorrichtung nach Anspruch 1 oder 2, **dadurch gekennzeichnet, dass** eine zweite Greifeinheit (B2) vorgesehen ist, die ausgestaltet ist, in einer zweiten Grundposition (G2), welche sich im zweiten Teilbereich (A2) befindet, einen Greifvorgang durchzuführen, um einen zweiten Teil der Hüllblätter (20") des Maiskolbens (2) zu erfassen, dass eine vorzugsweise angetriebene, zweite Führungseinheit (FE2) für die zweite Greifeinheit (B2) vorgesehen ist, wobei die zweite Führungseinheit (FE2) ausgestaltet ist, um die zweite Greifeinheit (B2) von der zweiten Grundposition (G2) entlang eines zweiten vorgegebenen, vorzugsweise zu dem ersten Bewegungspfad (P1) entlang der Längsachse (X) symmetrischen, Bewegungspfads (P2) zu bewegen, um auf den am Maiskolben (2) anliegenden zweiten Teil der Hüllblätter (20") eine quer zur Längsachse (X) nach außen verlaufende Querkraft (F2y) auszuüben und den zweiten Teil der Hüllblätter (20") radial vom Maiskolben (2) zu entfernen.

4. Vorrichtung nach Anspruch 3, **dadurch gekennzeichnet, dass** der zweite Teilbereich (A2) derart ausgestaltet ist und die zweite Grundposition (G2) derart im zweiten Teilbereich (A2) angeordnet ist, dass bei einem Greifvorgang der zweiten Greifeinheit (B2) der zweite Teil der Hüllblätter (20") im Bereich der Kolbenspitze (23) des Maiskolbens (2) erfasst wird

5. Vorrichtung nach Anspruch 3 oder 4 **dadurch gekennzeichnet, dass** die erste und zweite Grundposition (G1, G2) diametral um die Längsachse (X), vorzugsweise aneinander angrenzend, vorgesehen sind.

6. Vorrichtung nach einem der Ansprüche 3 bis 5, **dadurch gekennzeichnet, dass** die erste Führungseinheit (FE1) einen ersten Grundkörper (K1) umfasst, an welchem die erste Greifeinrichtung (B1) angeordnet ist, und dass die zweite Führungseinheit (FE2) einen zweiten Grundkörper (K2) umfasst, an welchem die zweite Greifeinrichtung (B1) angeordnet ist, wobei vorzugsweise die erste und zweite Greifeinrichtung (B1, B2) jeweils in einer Ausnehmung des zugehörigen Grundkörpers (K1, K2) angeordnet sind und wobei der erste und zweite Grundkörper (K1, K2) vorzugsweise jeweils rotationssymmetrisch ausgeführt sind.

7. Vorrichtung nach einem der Ansprüche 3 bis 6, **dadurch gekennzeichnet, dass** die erste Führungseinheit (FE1) derart ausgestaltet ist, dass der erste Bewegungspfad (P1) eine erste Bogenbewegung quer zur Längsachse (X), vorzugsweise eine Rotation um eine quer zur Längsachse (X) angeordnete erste Rotationsachse (A1) in einer ersten Rotationsrichtung (R1), umfasst, und die zweite Führungseinheit (FE2) derart ausgestaltet ist, dass der zweite Bewegungspfad (P2) zumindest eine zweite Bogenbewegung quer zur Längsachse (X) entgegen der ersten Bogenbewegung, vorzugsweise eine Rotation um eine quer zur Längsachse (X) angeordnete zweite Rotationsachse (A1) in einer zweiten Rotationsrichtung (R2) und entgegen der ersten Rotationsrichtung (R1), umfasst.

8. Vorrichtung nach einem der Ansprüche 3 bis 7 **dadurch gekennzeichnet, dass** die Führungseinheiten (FE1, FE2) derart ausgestaltet sind, dass der erste Bewegungspfad (P1) und der zweite Bewegungspfad (P2) eine zueinander gegenläufige Linearbewegung quer zur Längsachse (X) umfassen.

9. Vorrichtung nach einem der Ansprüche 3 bis 8 **dadurch gekennzeichnet, dass** zumindest eine, vorzugsweise zwei Greifeinheiten (B1, B2), zumindest ein zur Durchführung des Greifvorgangs verschiebbares, vorzugsweise quer zur Längsachse (X) verschiebbares, Greifelement umfasst.

10. Vorrichtung nach einem der Ansprüche 3 bis 9, **dadurch gekennzeichnet, dass** zumindest eine, vorzugsweise zwei Greifeinheiten (B1, B2), jeweils zwei zur Durchführung des Greifvorgangs gegenläufig verschiebbare, vorzugsweise quer zur Längsachse (X) gegenläufig verschiebbare, Greifelemente umfasst.

11. Vorrichtung nach einem der Ansprüche 1 bis 10, **dadurch gekennzeichnet, dass** eine Zuführeinheit (10) vorgesehen ist, welche ausgestaltet ist, den Maiskolben (2) im Arbeitsbereich (A) zu positionieren.

12. Vorrichtung nach einem der Ansprüche 1 bis 11, **dadurch gekennzeichnet, dass** eine Positioniereinrichtung (12) vorgesehen ist, die ausgestaltet ist den Maiskolben (2) nach dem Entfernen der Hüllblätter (20) in eine vorgegebene Entnahmeposition zu orientieren.

13. Vorrichtung nach Anspruch 12, **dadurch gekennzeichnet, dass** die Positioniereinrichtung (12) ausgestaltet ist den Maiskolben (2) in einer, vorzugsweise horizontalen, Aufnahmeposition aufzunehmen und in eine, vorzugsweise vertikale, Entnahmeposition zur Entnahme des Maiskolbens zu bringen, wobei die Positioniereinrichtung (12) vorzugsweise um eine Schwenkachse (121) von der Aufnahmeposition in die Entnahmeposition schwenkbar ist.

14. Vorrichtung nach einem der Ansprüche 1 bis 13, **dadurch gekennzeichnet, dass** eine Schnittvorrichtung (11) zum Abschneiden eines Kolbenstiels (22) vom Maiskolben (2), vorzugsweise dem Arbeitsbereich (A) nachgelagert, vorgesehen ist, die vorzugsweise zumindest zwei Messer, deren Klinge zum Abschneiden des Kolbenstiels (22) zueinander verschiebbar sind, umfasst, wobei die Klinge zumindest eines Messers vorzugsweise v-förmig oder konkav ausgestaltet ist.

15. Verfahren zum Entfernen von Hüllblättern (20) von Maiskolben (2), wobei ein Maiskolben (2) längs entlang einer Längsachse (X) in einen Arbeitsbereich (A) angeordnet wird, wobei der Arbeitsbereich (A) entlang der Längsachse (X) in einen ersten Teilbereich (A1) und einen zweiten Teilbereich (A2) unterteilt ist, **dadurch gekennzeichnet, dass** ein erster Teil der Hüllblätter (20`) im ersten Teilbereich (A1) von einer in einer ersten Grundposition (G1) befindlichen ersten Greifeinrichtung (B1) erfasst wird, dass die erste Greifeinheit (B1) mittels einer ersten Führungseinheit (FE1) von der ersten Grundposition (G1) entlang eines zweiten vorgegebenen Bewegungspfads (P2) bewegt wird, sodass eine quer zur Längsachse (X) nach außen verlaufende Querkraft (F1y) auf den ersten Teil der Hüllblätter (20`) ausgeübt und den ersten Teil der Hüllblätter (20`) radial vom Maiskolben (2) entfernt wird.

16. Verfahren nach Anspruch 15, **dadurch gekennzeichnet, dass** ein zweiter Teil der Hüllblätter (20") im zweiten Teilbereich (A2) von einer in einer zweiten Grundposition (G2) befindlichen zweiten Greifeinrichtung (B2) erfasst, **und dass** die zweite Greifeinheit (B2) mittels einer zweiten Führungseinheit (FE2) von der zweiten Grundposition (G2) entlang eines zweiten vorgegebenen Bewegungspfads (P2) bewegt wird, sodass eine quer zur Längsachse (X) nach außen verlaufende Querkraft (F2y) auf den zweiten Teil der Hüllblätter (20") ausgeübt und der zweiten Teil der Hüllblätter (20") radial vom Maiskolben (2) entfernt wird.

## Claims

1. A device for removing the husks (20) of a corncob (2), **characterized in that** a working region (A) is equipped, wherein the working region (A) is provided for arranging a corncob (2) along a longitudinal axis (X) and is divided into a first sub-region (A1) and a second sub-region (A2) along the longitudinal axis (X), **in that** a first gripping unit (B1) is provided which is designed to carry out a gripping process in a first base position (G1) which is located in the first sub-region (A1) in order to grip a first part of the husks (20') of the corncob (2), **and in that** a first guide unit (FE1), preferably a driven first guide unit (FE1), is provided for the first gripping unit (B1), wherein the first guide unit (FE1) is designed to move the first gripping unit (B1) from the first base position (G1) along a first movement path (P1) in order to exert a lateral force (F1y), which runs outwards laterally relative to the longitudinal axis (X), onto the first part of the husks (20`) and remove the first part of the husks (20`) from the corncob (2) in a radial direction.

2. The device according to claim 1, **characterized in that** the first sub-region (A1) is designed such that and the first base position (G1) is arranged in the first sub-region (A1) such that during a gripping process of the first gripping unit (B1) the first part of the husks (20') is gripped in the region of a cob tip (23) of the corncob (2).

3. The device according to claim 1 or 2, **characterized in that** a second gripping unit (B2) is provided which is designed to carry out a gripping process in a second base position (G2), which is located in the second sub-region (A2), in order to grip a second part of the husks (20") of the corncob (2), **in that** a second guide unit (FE2), preferably a driven second guide unit (FE2), is provided for the second gripping unit (B2), wherein the second guide unit (FE2) is designed to move the second gripping unit (B2) from the second base position (G2) along a second predetermined movement path (P2), wherein preferably the respective movement paths (P1, P2) along the longitudinal axis (X) are symmetrical to one another, in order to exert a lateral force (F2y), which runs outwards laterally relative to the longitudinal axis (X), onto the second part of the husks (20") on the corncob (2) and remove the second part of the husks (20") from the corncob (2) in a radial direction.

4. The device according to claim 3, **characterized in that** the second sub-region (A2) is designed such that and the second base position (G2) is arranged in the second sub-region (A2) such that during a gripping process of the second gripping unit (B2) the second part of the husks (20") is gripped in the region of the cob tip (23) of the corncob (2)

5. The device according to claim 3 or 4, **characterized in that** the first and second base positions (G1, G2) are provided diametrically about the longitudinal axis (X), preferably adjacent to one another.

6. The device according to any one of claims 3 to 5, **characterized in that** the first guide unit (FE1) comprises a first base body (K1) on which the first gripping apparatus (B1) is arranged, **and in that** the second guide unit (FE2) comprises a second base body (K2) on which the second gripping apparatus (B2) is arranged, wherein preferably first and second gripping apparatuses (B1, B2) are each arranged in a recess of the associated base body (K1, K2) and wherein preferably the first and second base bodies (K1, K2) are each designed to be rotationally symmetrical.

7. The device according to any one of claims 3 to 6, **characterized in that** the first guide unit (FE1) is designed such that the first movement path (P1) comprises a first arc movement lateral relative to the longitudinal axis (X), preferably a rotation about a first rotational axis (A1) arranged laterally relative to the longitudinal axis (X) in a first rotational direction (R1), and **in that** the second guide unit (FE2) is designed such that the second movement path (P2) comprises at least a second arc movement lateral relative to the longitudinal axis (X) counter to the first arc movement, preferably a rotation about a second rotational axis (A1) arranged laterally relative to the longitudinal axis (X) in a second rotational direction (R2) and counter to the first rotational direction (R1).

8. The device according to any one of claims 3 to 7, **characterized in that** the guide units (FE1, FE2) are designed such that the first movement path (P1) and the second movement path (P2) comprise a mutually counter-rotating linear movement lateral relative to the longitudinal axis (X).

9. The device according to any one of claims 3 to 8, **characterized in that** at least one, preferably two, gripping units (B1, B2) comprise at least one gripping element which is displaceable, preferably displaceable laterally to the longitudinal axis (X), for carrying out the gripping process.

10. The device according to any one of claims 3 to 9, **characterized in that** at least one, preferably two, gripping units (B1, B2) each comprise two gripping elements which are displaceable in the opposite direction, preferably displaceable in the opposite direction lateral relative to the longitudinal axis (X), for carrying out the gripping process.

11. The device according to any one of claims 1 to 10, **characterized in that** a feed unit (10) is provided which is designed to position the corncob (2) in the working region (A).

12. The device according to any one of claims 1 to 11, **characterized in that** a positioning apparatus (12) is provided which is designed to orient the corncob (2) into a predetermined removal position after removal of the husks (20).

13. The device according to claim 12, **characterized in that** the positioning apparatus (12) is designed to receive the corncob (2) in a, preferably horizontal, receiving position and to bring it to a, preferably vertical, removal position for removing the corncob, wherein preferably the positioning apparatus (12) is pivotable about a pivot axis (121) from the receiving position to the removal position.

14. The device according to any one of claims 1 to 13, **characterized in that** a cutting device (11) is provided, preferably located downstream of the working region (A), for cutting off a cob stem (22) from the corncob (2), which preferably comprises at least two knives, the blade of which can be displaced relative to one another for cutting off the cob stem (22), whereas preferably the blade of at least one knife is designed to be v-shaped or concave.

15. A method for removing the husks (20) from corncobs (2), wherein a corncob (2) is arranged longitudinally along a longitudinal axis (X) in a working region (A), wherein the working region (A) is divided into a first sub-region (A1) and a second sub-region (A2) along the longitudinal axis (X), **characterized in that** a first part of the husks (20') is gripped in the first sub-region (A1) by a first gripping apparatus (B1) located in a first base position (G1), **and in that** the first gripping unit (B1) is moved by means of a first guide unit (FE1) from the first base position (G1) along a second predetermined movement path (P2), so that a lateral force (F1y), which runs outwards laterally relative to the longitudinal axis (X), is exerted onto the first part of the husks (20') and the first part of the husks (20') is removed from the corncob (2) in a radial direction.

16. The method according to claim 15, **characterized in that** a second part of the husks (20") in the second sub-region (A2) is gripped by a second gripping apparatus (B2) located in a second base position (G2), **and in that** the second gripping unit (B2) is moved by means of a second guide unit (FE2) from the second base position (G2) along a second predetermined movement path (P2), so that a lateral force (F2y), which runs outwards laterally relative to the longitudinal axis (X), is exerted onto the second part of the husks (20") and the second part of the husks (20") is removed from the corncob (2) in a radial direction.

## Revendications

1. Dispositif permettant d'enlever des spathes (20) d'un épi de maïs (2), **caractérisé en ce qu'**une zone de travail (A) est prévue, dans lequel la zone de travail (A) est prévue pour la disposition d'un épi de maïs (2) le long d'un axe longitudinal (X) et est divisée le long de l'axe longitudinal (X) en une première zone partielle (A1) et en une seconde zone partielle (A1), **en ce qu'**une première unité de préhension (B1) est prévue, laquelle est conçue pour réaliser un processus de préhension dans une première position de base (G1) qui se trouve dans la première zone partielle (A1), afin de saisir une première partie des spathes (20') de l'épi de maïs (2), **et en ce qu'**une première unité de guidage (FE1), de préférence entraînée, est prévue pour la première unité de préhension (B1), dans lequel la première unité de guidage (FE1) est conçue pour déplacer la première unité de préhension (B1) depuis la première position de base (G1) le long d'une première trajectoire de déplacement (P1) afin d'exercer sur la première partie des spathes (20') une force transversale (F1y) s'étendant vers l'extérieur transversalement à l'axe longitudinal (X) et d'enlever radialement la première partie des spathes (20') de l'épi de maïs (2).

2. Dispositif selon la revendication 1, **caractérisé en ce que** la première zone partielle (A1) est conçue et la première position de base (G1) est disposée dans la première zone partielle (A1) de telle sorte que, lors d'un processus de préhension de la première unité de préhension (B1), la première partie des spathes (20') est saisie dans la zone d'une pointe d'épi (23) de l'épi de maïs (2).

3. Dispositif selon la revendication 1 ou 2, **caractérisé en ce qu'**une seconde unité de préhension (B2) est prévue, laquelle est conçue pour réaliser un processus de préhension dans une seconde position de base (G2) qui se trouve dans la seconde zone partielle (A2), afin de saisir une seconde partie des spathes (20") de l'épi de maïs (2), **en ce qu'**une seconde unité de guidage (FE2), de préférence entraînée, est prévue pour la seconde unité de préhension (B2), dans lequel la seconde unité de guidage (FE2) est conçue pour déplacer la seconde unité de préhension (B2) depuis la seconde position de base (G2) le long d'une seconde trajectoire de déplacement (P2) prédéfinie, de préférence symétrique à la première trajectoire de déplacement (P1) le long de l'axe longitudinal (X), afin d'exercer sur la seconde partie des spathes (20") reposant sur l'épi de maïs (2) une force transversale (F2y) s'étendant vers l'extérieur transversalement à l'axe longitudinal (X) et d'enlever radialement la seconde partie des spathes (20") de l'épi de maïs (2).

4. Dispositif selon la revendication 3, **caractérisé en ce que** la seconde zone partielle (A2) est conçue et la seconde position de base (G2) est disposée dans la seconde zone partielle (A2) de telle sorte que, lors d'un processus de préhension de la seconde unité de préhension (B2), la seconde partie des spathes (20") est saisie dans la zone de la pointe d'épi (23) de l'épi de maïs (2).

5. Dispositif selon la revendication 3 ou 4 **caractérisé en ce que** la première et la seconde position de base (G1, G2) sont prévues diamétralement autour de l'axe longitudinal (X), de préférence de manière à être adjacentes l'une à l'autre.

6. Dispositif selon l'une des revendications 3 à 5, **caractérisé en ce que** la première unité de guidage (FE1) comprend un premier corps de base (K1) sur lequel est disposé le premier appareil de préhension (B1), **et en ce que** la seconde unité de guidage (FE2) comprend un second corps de base (K2) sur lequel est disposé le second appareil de préhension (B1), dans lequel, de préférence, le premier et le second appareil de préhension (B1, B2) sont respectivement disposés dans un évidement du corps de base (K1, K2) correspondant et dans lequel le premier et le second corps de base (K1, K2) sont de préférence respectivement formés de manière symétrique en rotation.

7. Dispositif selon l'une des revendications 3 à 6, **caractérisé en ce que** la première unité de guidage (FE1) est conçue de telle sorte que la première trajectoire de déplacement (P1) comprend un premier déplacement en arc transversalement à l'axe longitudinal (X), de préférence une rotation autour d'un premier axe de rotation (A1) disposé transversalement à l'axe longitudinal (X) dans un premier sens de rotation (R1), et la seconde unité de guidage (FE2) est conçue de telle sorte que la seconde trajectoire de déplacement (P2) comprend au moins un second déplacement en arc transversalement à l'axe longitudinal (X) à l'encontre du premier déplacement en arc, de préférence une rotation autour d'un second axe de rotation (A1) disposé transversalement à l'axe longitudinal (X) dans un second sens de rotation (R2) et à l'encontre du premier sens de rotation (R1).

8. Dispositif selon l'une des revendications 3 à 7 **caractérisé en ce que** les unités de guidage (FE1, FE2) sont conçues de telle sorte que la première trajectoire de déplacement (P1) et la seconde trajectoire de déplacement (P2) comprennent des déplacements linéaires opposés l'un à l'autre transversalement à l'axe longitudinal (X).

9. Dispositif selon l'une des revendications 3 à 8 **caractérisé en ce qu'**au moins une, de préférence deux unités de préhension (B1, B2), comprennent au moins un élément de préhension pouvant coulisser pour la réalisation du processus de préhension, de préférence pouvant coulisser transversalement à l'axe longitudinal (X).

10. Dispositif selon l'une des revendications 3 à 9, **caractérisé en ce qu'**au moins une, de préférence deux unités de préhension (B1, B2), comprennent respectivement deux éléments de préhension pouvant coulisser en sens inverse pour la réalisation du processus de préhension, de préférence pouvant coulisser en sens inverse transversalement à l'axe longitudinal (X).

11. Dispositif selon l'une des revendications 1 à 10,
**caractérisé en ce qu'**une unité d'acheminement (10) est prévue, laquelle est conçue pour positionner l'épi de maïs (2) dans la zone de travail (A).

12. Dispositif selon l'une des revendications 1 à 11, **caractérisé en ce qu'**un appareil de positionnement (12) est prévu, lequel est conçu pour orienter l'épi de maïs (2) dans une position d'enlèvement prédéfinie après l'enlèvement des spathes (20).

13. Dispositif selon la revendication 12, **caractérisé en ce que** l'appareil de positionnement (12) est conçu pour recevoir l'épi de maïs (2) dans une position de réception, de préférence horizontale, et pour l'amener dans une position d'enlèvement, de préférence verticale, pour l'enlèvement de l'épi de maïs, dans lequel l'appareil de positionnement (12) peut de préférence pivoter autour d'un axe de pivotement (121) de la position de réception vers la position d'enlèvement.

14. Dispositif selon l'une des revendications 1 à 13, **caractérisé en ce qu'**un dispositif de coupe (11) est prévu pour la coupe d'une tige d'épi (22) de l'épi de maïs (2), de préférence en aval de la zone de travail (A), lequel dispositif de coupe comprend de préférence au moins deux couteaux dont les lames peuvent coulisser l'une par rapport à l'autre pour la coupe de la tige d'épi (22), dans lequel la lame d'au moins un couteau est de préférence conçue en forme de V ou de forme concave.

15. Procédé permettant d'enlever des spathes (20) d'un épi de maïs (2), dans lequel un épi de maïs (2) est disposé longitudinalement le long d'un axe longitudinal (X) dans une zone de travail (A), dans lequel la zone de travail (A) est divisée le long de l'axe longitudinal (X) en une première zone partielle (A1) et en une seconde zone partielle (A2), **caractérisé en ce qu'**une première partie des spathes (20') est saisie dans la première zone partielle (A1) par un premier appareil de préhension (B1) se trouvant dans une première position de base (G1), **en ce que** le premier appareil de préhension (B1) est déplacé au moyen d'une première unité de guidage (FE1) depuis la première position de base (G1) le long d'une seconde trajectoire de déplacement (P2) prédéfinie, de sorte qu'une force transversale (F1y) s'étendant vers l'extérieur transversalement à l'axe longitudinal (X) est exercée sur la première partie des spathes (20') et que la première partie des spathes (20') est enlevée radialement de l'épi de maïs (2).

16. Procédé selon la revendication 15, **caractérisé en ce qu'**une seconde partie des spathes (20") est saisie dans la seconde zone partielle (A2) par un second appareil de préhension (B2) se trouvant dans une seconde position de base (G2), **et en ce que** le second appareil de préhension (B2) est déplacé au moyen d'une seconde unité de guidage (FE2) depuis la seconde position de base (G2) le long d'une seconde trajectoire de déplacement (P2) prédéfinie, de sorte qu'une force transversale (F2y) s'étendant vers l'extérieur transversalement à l'axe longitudinal (X) est exercée sur la seconde partie des spathes (20") et que la seconde partie des spathes (20") est enlevée radialement de l'épi de maïs (2).
